# EUROPÄISCHE PATENTSCHRIFT

(11) **EP 0 695 881 B1**
(45) Veröffentlichungstag und Bekanntmachung des Hinweises auf die Patenterteilung: **26.05.1999**
(21) Anmeldenummer: 95112142.5
(22) Anmeldetag: 02.08.1995
(51) Int. Cl.: F16B 7/18, E04B 1/19

(54) **Stangenkupplung, insbesondere Eckverbindungskupplung für Hohlprofilstangen**
Rod connection, especially corner joint for hollow profile rod
Connexion de tiges, en particulier joint d'angle pour tiges à profil creux

(30) Priorität: 03.08.1994 DE 4427398
(43) Veröffentlichungstag der Anmeldung: 07.02.1996
(73) Patentinhaber: RIEDEL VARITO GmbH, 91489 Wilhelmsdorf (DE)
(72) Erfinder: Falter, Manfred, D-91413 Neustadt/Aisch (DE)
(74) Vertreter: Gassner, Wolfgang, Dr.-Ing.

(56) Entgegenhaltungen:
- DE-C- 3 813 052
- FR-A- 2 262 217
- US-A- 3 563 581
- US-A- 3 837 754

## Beschreibung

Die Erfindung bezieht sich auf eine Stangenkupplung, insbesondere Eckverbindungskupplung für Hohlprofilstangen.

Stangenkupplungen sind in den verschiedensten Ausführungsformen bekannt. Ein großer Teil von ihnen ist nicht für alle sechs Richtungen (vorne, hinten, rechts, links, oben, unten) verwendbar. Eine Richtung bleibt dann frei bzw. unbelegt, wie es z.B. aus der DE-3813052 C2 hervorgeht.

Durch die vorliegende Erfindung soll demgegenüber die Möglichkeit geschaffen werden, mit der Stangenkupplung Stangen aus allen 6 Hauptrichtungen zu kuppeln und darüber hinaus sogar zusätzliche Richtungen mittels der Stangenkupplung vorzusehen. Darüber hinaus soll die Stangenkupplung ein kompaktes, stabiles Gebilde sein, bei dem im Kupplungsknoten ein gesonderter Abschlußstopfen oder ein gesondertes Kupplungsgehäuse zum Einstecken und Verriegeln der Stangenenden nicht erforderlich ist.

Aufgabe der vorliegenden Erfindung ist es, eine Stangenkupplung bereitzustellen, mit der die Nachteile des Stands der Technik beseitigt werden. Insbesondere soll eine Stangenkupplung angegeben werden, die eine hohe Paßgenauigkeit aufweist, große Verspannkräfte aufbringt und schnell montabel sowie demontabel ist.

Diese Aufgabe wird durch die Merkmale der Ansprüche 1 und 18 gelöst. Zweckmäßige Weiterbildungen ergeben sich aus den Ansprüchen 2 bis 17 und 19 bis 23.

Die mit der Erfindung erzielbaren Vorteile sind vor allem darin zu sehen, daß es sich um ein sehr vielseitiges Stangenkupplungssystem handelt, mit welchem nicht nur sechs Hauptrichtungen, sondern weitere Richtungen mit den anzuschließenden Stangen belegt werden können. Die neue Stangenkupplung gewährleistet eine sehr hohe Paßgenauigkeit und große Verspannkräfte. Sie eignet sich sehr gut zur Schnellmontage und Schnelldemontage, weil die Spannschrauben (pro Kupplungsknoten ist es im allgemeinen nur eine, vorzugsweise eine Innensechskant-Schraube) sich schnell lösen und wieder einschrauben lassen.

Weitere Merkmale und Vorteile der Erfindung werden im folgenden anhand der Zeichnung, in welcher mehrere Ausführungsbeispiele dargestellt sind, noch näher erläutert. In der Zeichnung zeigt, z.T. in vereinfachter schematischer Darstellung:
- **Fig. 1**: ein erstes Ausführungsbeispiel, der Stangenkupplung mit einem Kupplungsknoten, der noch teilweise offen ist, in perspektivischer Darstellung,
- **Fig. 2**: die Stangenkupplung nach Fig. 1 in einer anderen Blickrichtung,
- **Fig. 3**: die Stangenkupplung nach Fig. 1 und Fig. 2, bei welcher nur drei Stangen angeschlossen sind und der Blick durch die offene Deckfläche ins Innere gerichtet ist,
- **Fig. 4**: der Blick in den noch offenen Kupplungsknoten der Stangenkupplung, bei der links und rechts das erste und das zweite Verschlußmittel zu sehen sind,
- **Fig. 5**: in perspektivischer Darstellung das erste Verschlußmittel,
- **Fig. 6**: im Ausschnitt eine Stange mit stangenendseitig eingefügtem pyramidenstumpfförmigem Kupplungselement in Seitenansicht,
- **Fig. 7**: den Gegenstand nach Fig. 6 perspektivisch schräg von vorn,
- **Fig. 8**: den Gegenstand nach Fig. 7 in der entgegengesetzten Blickrichtung perspektivisch gesehen,
- **Fig. 9**: in entsprechender Darstellung zu Fig. 1 eine Abwandlung des ersten Ausführungsbeispiels nach Fig. 1 bis 8 mit einem zweiteiligen ersten Verschlußmittel,
- **Fig. 10**: in entsprechender Darstellung zu Fig. 9 eine weitere Abwandlung des Ausführungsbeispiels nach Fig. 9 mit Randaussparungen an den Kupplungselementen bzw. am Verschlußmittel-Oberteil und mit Schlitzen am Verschlußmittel-Unterteil,
- **Fig. 11**: das Verschlußmittel-Unterteil nach Fig. 10 vergrößert und mit kleinen Zapfen an seinen Füßen versehen,
- **Fig. 12**: die Ansicht des Verschlußmittel-Unterteils nach Fig. 11 von unten,
- **Fig. 13**: eine Draufsicht auf einen Kupplungsknoten nach einem weiteren Ausführungsbeispiel, bei dem vier mantelseitige Kupplungselemente in Umfangsrichtung aneinandergefügt sind,
- **Fig. 14**: ein von der Deck- oder Bodenseite her in den Kupplungsknoten nach Fig. 13 einzufügendes erstes Verschlußmittel mit vier Paßschrauben im Aufriß,
- **Fig. 15**: ein zweites Verschlußmittel im Aufriß, welches mit dem Kupplungsknoten nach Fig. 13 und dem Verschlußmittel nach Fig. 14 zusammensteckbar und verschraubbar ist,
- **Fig. 16**: eine Seitenansicht des Kupplungsknotens nach Fig. 13,
- **Fig. 17**: eine Draufsicht auf die Außenfläche des Verschlußmittels nach Fig. 14,
- **Fig. 18**: in Draufsicht einen offenen Kupplungsknoten einer weiteren Stangenkupplung mit dreieckiger Grundfläche, wobei der Spitzenwinkel der Kupplungselemente 120° beträgt,
- **Fig. 19**: einen zum Teil oben offen gezeigten sechseckigen Kupplungsknoten einer weiteren Stangenkupplung, bei dem der Spitzenwinkel der einzelnen Kupplungselemente 60° beträgt und
- **Fig. 20**: eine Draufsicht auf einen oben offenen kugelförmigen Kupplungsknoten der grundsätzlichen Ausführung wie in Fig. 1 bis 12, dessen Kupplungselemente jedoch außen zu Kugelsegmenten ergänzt sind.

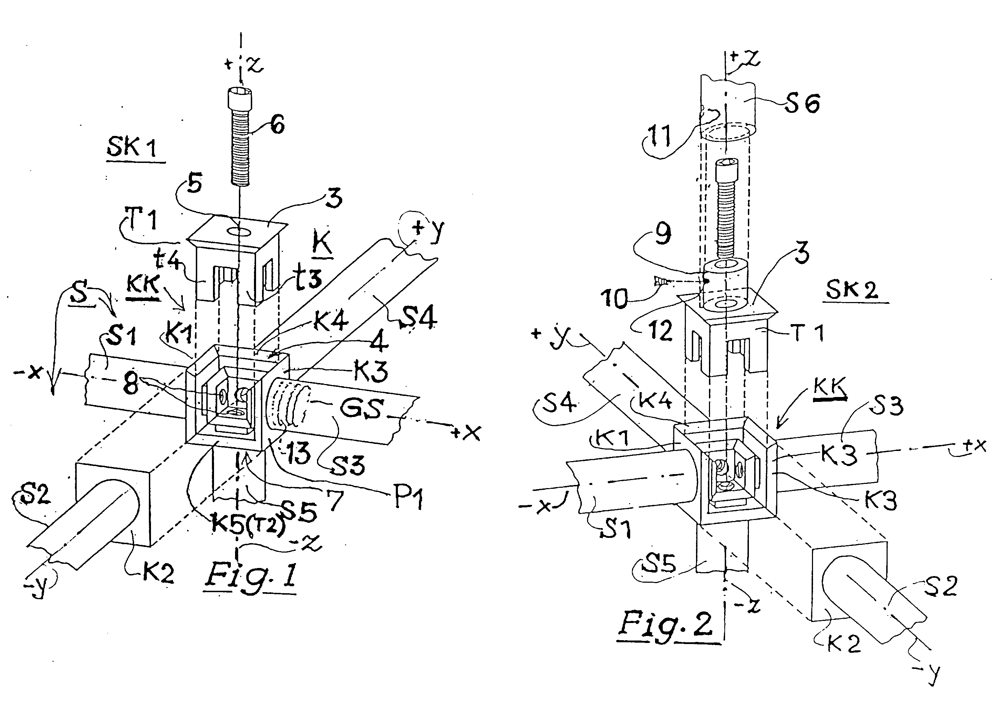

Die in Fig. 1 dargestellte Stangenkupplung *SK 1* dient als Eckverbindungskupplung für die Hohlprofilstangen *S 1* bis *S 4* (links, vorne, rechts, hinten) und S 5 (unten). Bei den Stangen *S 1* bis *S 5* kann es sich um Stahlrohre von Regalen handeln, die miteinander gekuppelt werden. Die Stangen haben ein Rundprofil, was aber nicht zwingend erforderlich ist. An die Enden der Stangen, die generell mit *S* bezeichnet werden, sind pyramidenstumpfförmige Kupplungselemente *K 1* bis *K 5* angeschlossen. Zu diesem Zweck können die Kupplungselemente, die generell mit *K* bezeichnet werden, an ihrer Außenfläche jeweils mit Gewindestutzen *GS* versehen sein, wie es beim Kupplungselement *K 3* gestrichelt angedeutet ist, auf welche die Stangen *S* mit entsprechenden Innengewinden aufschraubbar sind.

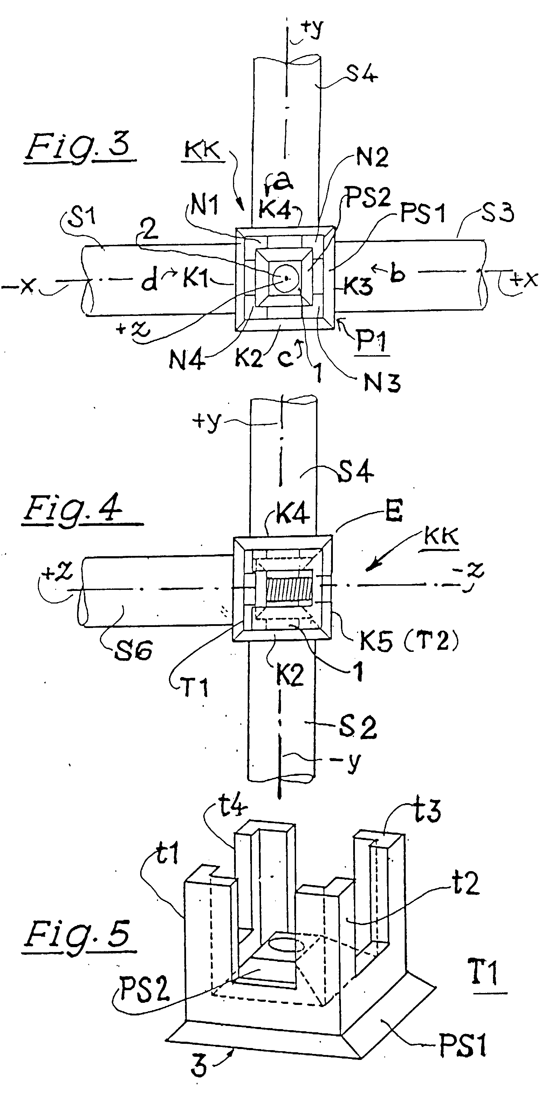

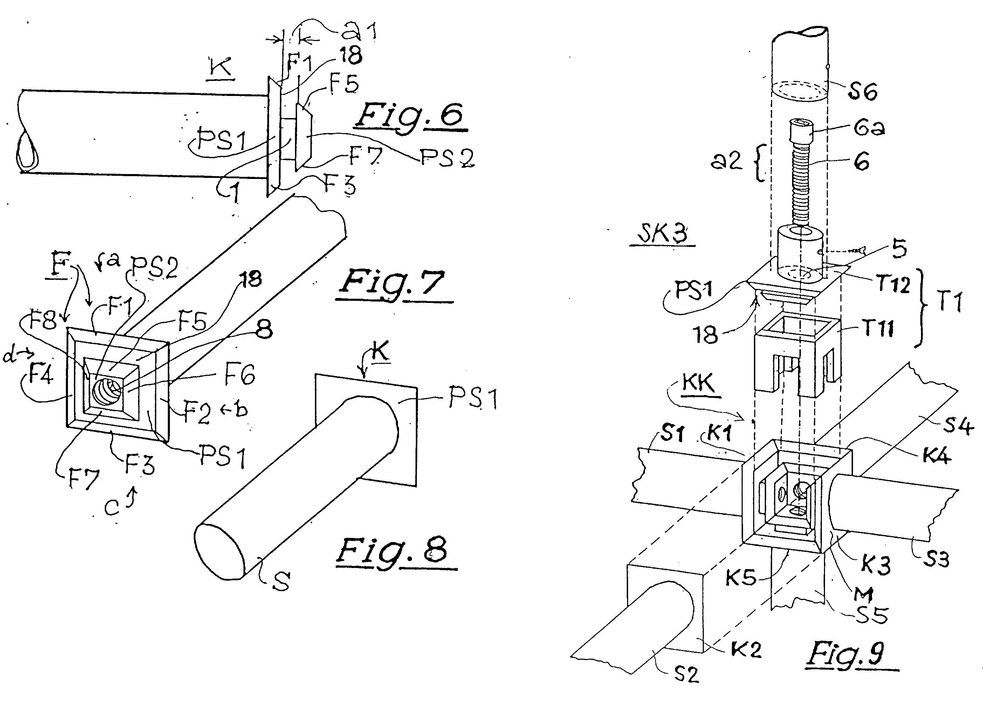

Fig. 1 zeigt in Verbindung mit Fig. 3 sowie Fig. 6 und Fig. 7, daß die Kupplungselemente *K* mit Paßflächen *F 1* bis *F 8* (generell mit *F* bezeichnet) versehen sind, wobei jedes der Kupplungselemente *K* diese acht Paßflächen aufweist und wobei die Kupplungselemente mit diesen Paßflächen in Umfangsrichtung aneinandergefügt einen Kupplungsknoten *KK* bilden, der zunächst die Gestalt eines grund- und deckseitig offenen Prismenkörpers *P 1* hat (Fig. 1 bis 3). Jedes der Kupplungselemente *K* bzw. *K 1* bis *K 5* weist wenigstens zwei pyramidenstumpfförmige Elementabschnitte *PS 1* und *PS* 2 auf, welche - siehe insbesondere Fig. 6 und 7 - im Abstand a *1* zueinander angeordnet, sich von einem zentralen rechteckigen Schaft *1* des jeweiligen Kupplungselements *K* quer mit ihren Paßflächen *F 1* bis *F 8* zu vier Seiten *a* bis *d* hin erstrecken, so daß zwischen den Elementabschnitten *PS 1, PS* 2 (siehe insbesondere Fig. 3) Führungskanäle bzw. von Nischen *N 1* bis *N 4* und um die Achsen *x, y, z* des Kupplungsknotens *KK* ein zentraler Hohlraum 2 frei bleiben. Dieser Hohlraum *2* ist, wie es Fig. 1 und Fig. 3 zeigen, ein Quader. Der offene Prismenkörper *P 1* ist, wenn - wie gemäß einer bevorzugten Ausführung dargestellt - die Paßflächen *F 1* bis *F* 4 des ersten Elementabschnitte *PS 1* sowie auch die Paßflächen *F* 5 bis *F 8* des zweiten Elementabschnitts *PS* 2 untereinander gleich lang sind, ein würfelartiges Gebilde; der in Fig. 3 oder Fig. 1 dargestellte Kupplungsknoten *KK* hat dann gewissermaßen die Gestalt einer offenen Würfelecke. Dieser offene Prismenkörper kann aber gemäß Fig. 1 und 2 geschlossen werden. Der besseren Übersicht wegen sind die drei Achsen des Kupplungsknotens *KK* der Stangenkupplungen *SK 1* (Fig. 1) oder *SK* 2 (Fig. 2) mit *x, y, z* entsprechend dem Kartesischen Koordinatensystem bezeichnet und die sechs Hauptrichtungen für die anzukuppelnden Stangen mit + *x, - x, + y, - y, + z* und - *z*.

Hierzu wird (in der in Fig. 1 dargestellten Lage des Kupplungsknotens *KK)* von der Deckseite her ein erstes Verschlußmittel *T 1* mit daran vorgesehenen Profilen *t 1* bis *t 4* in die Führungskanäle *N 1* bis *N 4* (Fig. 3) zwischen den Kupplungselementen *K* bzw. K 1 bis K 4 so eingefügt, daß es mit seiner Deckfläche 3, welche zugleich einen Elementabschnitt *PS 1* bildet, die nach oben offene Deckseite 4 des Prismenkörpers *P 1* (Fig. 1) im wesentlichen verschließt. Das erste Verschlußmittel *T 1* weist eine zentrale Durchgangsöffnung *5* für den Schaft einer Spannschraube *6* auf, wobei die Durchgangsöffnung 5 zum Einsenken des Schraubenkopfes erweitert ist. Die Spannschraube *6* ist, wie in Fig. 1 dargestellt, bevorzugt eine Innensechskantschraube. Auf der dem ersten Verschlußmittel *T 1* gegenüberliegenden Grundseite *7* des Kupplungsknotens *KK* ist nun ein zweites Verschlußmittel *T* 2 eingepaßt, welches eine Gewindebohrung *8* koaxial zur Achse z des Kupplungsknotens und koaxial zur Durchgangsöffnung *5* aufweist und welches mittels der Spannschraube *6* mit dem ersten Verschlußmittel *T 1* und den Paßflächen *F* der Kupplungselemente *K 1* bis *K* 4 verspannbar ist. Wird also das erste Verschlußmittel *T 1* mit dem zweiten Verschlußmittel T 2 (welches identisch ist mit dem eingangs erläuterten Kupplungselement *K* 5) verspannt, dann sind auch die in Umfangsrichtung des Kupplungsknotens *KK* angeordneten Kupplungselemente *K 1* bis *K* 4 mitverspannt, und es bildet sich so ein nach außen geschlossener Würfel, welcher aufgrund der hohen Verspannkräfte und der genau bearbeiteten Paßflächen ein starres Gebilde ist. Man könnte die Verspannkräfte noch dadurch steigern, daß man die Profile *t 1* bis *t 4* noch schwach keilförmig anspitzt; dies ist aber bei den normalen Stangenkupplungen nicht erforderlich, weil die Verspannkräfte schon bei parallelen Profilflächen sehr hoch sind. Wird nun jedem Kupplungselement *K* bzw. *K 1* bis *K 5* eine Gewindebohrung *8* in seiner Achse *x, y* bzw. z zugeordnet, dann sind alle Kupplungselemente zueinander gleichberechtigt und können das Gegenpaßstück zu dem ersten Verschlußmittel *T 1* mit seinen Profilen bilden.

Die Stangenkupplung *SK 2* nach Fig. 2 unterscheidet sich von derjenigen (*SK 1*) nach Fig. 1 dadurch, daß das erste Verschlußmittel *T 1* als Kupplungselement ausgebildet ist und hierzu an seiner Deckfläche *3* ein kleiner Stutzen *9* angeformt oder angebracht ist, an welchem die Hohlprofilstange *S 6* angekuppelt werden kann. Dies geschieht hier mit einer Madenschraube *10,* welche die Stange in einer Bohrung *11* durchdringt und in einer Gewindebohrung *12* am Außenumfang des Stutzens *9* verankert werden kann. Der Stutzen *9* kann jedoch auch mit einem Außengewinde 13 versehen sein, so wie anhand von Fig. 1 (Stange *S 3*) bereits erläutert, so daß die Stange *S 6* mit einem entsprechenden Innengewinde auf den Stutzen 9 aufgeschraubt werden kann.

Bei Betrachtung von Fig. 1 und Fig. 2 erkennt man, daß der Kupplungsknoten *KK,* der im geschlossenen Zustand einen vollständigen Würfel bildet, dann, wenn man ihn in einer Richtung streckt, eine quaderförmige Gestalt annehmen würde. Man erkennt auch aus Fig. 1 und Fig. 2, daß die mantelseitigen Kupplungselemente *K 1* bis *K 4* und das zweite Verschlußmittel *T 2,* welches identisch ist mit dem bodenseitigen Kupplungselement *K 5,* in ihrer Form und ihren Abmessungen gleichartig ausgebildet sind, wobei alle wegen ihrer Gleichberechtigung auch eine Gewindebohrung *8* in der Achse ihres Schaftes *1* - siehe Fig. 6 - haben. Das erste Verschlußmittel *T 1* kann auf diese Weise je nach seiner Position mit jedem der übrigen fünf Kupplungselemente *K 1* bis *K 5*, wenn dieses ihm gegenüberliegt, verschraubt werden. Die Verschraubung des ersten Verschlußmittels *T 1* mit dem gegenüberliegenden zweiten Verschlußmittel *T 2* bzw. Kupplungselement *K* 5 ist aus Fig. 4 deutlich erkennbar.

Bei der Stangenkupplung *SK 3* nach Fig. 9 ist das erste Verschlußmittel *T 1* zweiteilig ausgebildet. Es besteht aus einem Verschlußmittel-Unterteil *T 11* und einem Verschlußmittel-Oberteil *T 12,* welches tischplattenartig auf das Verschlußmittel-Unterteil *T 11* aufsetzbar ist, und zwar gegen die plane untere oder innere Begrenzungsfläche *18* des oberen Elementabschnitts *PS 1,* die man in Fig. 9 nicht sieht, dafür aber in Fig. 6 und 7. Im aufgesetzten Zustand kann das Verschlußmittel-Oberteil *T 12* zusammen mit dem Verschlußmittel-Unterteil *T 11* mittels einer Spannschraube 6 mit den übrigen Kupplungselementen *K* 1 bis *K* 5 zu einem geschlossenen Kuppungsknoten *KK* verspannt werden.

Das Verschlußmittel-Oberteil *T 12* kann eine glatte (gewindefreie) Durchgangsöffnung *5* für den Schaft der Spannschraube *6* haben (in Fig. 9 dargestellt) oder eine Gewindebohrung *8* wie die übrigen Kupplungselemente *K 1* bis *K 5*. Im letztgenannten Fall ist das Verschlußmittel-Oberteil T 12 zu den Kupplungselementen *K 1* bis *K 5 (K* 5 = *T* 2) kompatibel, d.h. austauschbar, so daß jedes der Kupplungselemente *K* mit dem Verschlußmittel-Unterteil *T 11* zu einem ersten Verschlußmittel *T 1* kombinierbar ist. Dies ergibt Vorteile in der Herstellung und Montage. Damit trotzdem ein Dehnschrauben-Effekt erreicht werden kann, kann das Gewinde der Spannschraube *6* direkt angrenzend an ihren Schraubenkopf *6a* auf einer kleinen Strecke *a 2* weggelassen werden, so daß die Spannschraube *6* im festgezogenen Zustand zwischen Schraubenkopf und dem gegenüberliegenden Kupplungsteil *K 5* (= *T 2*) auf Zug beansprucht wird.

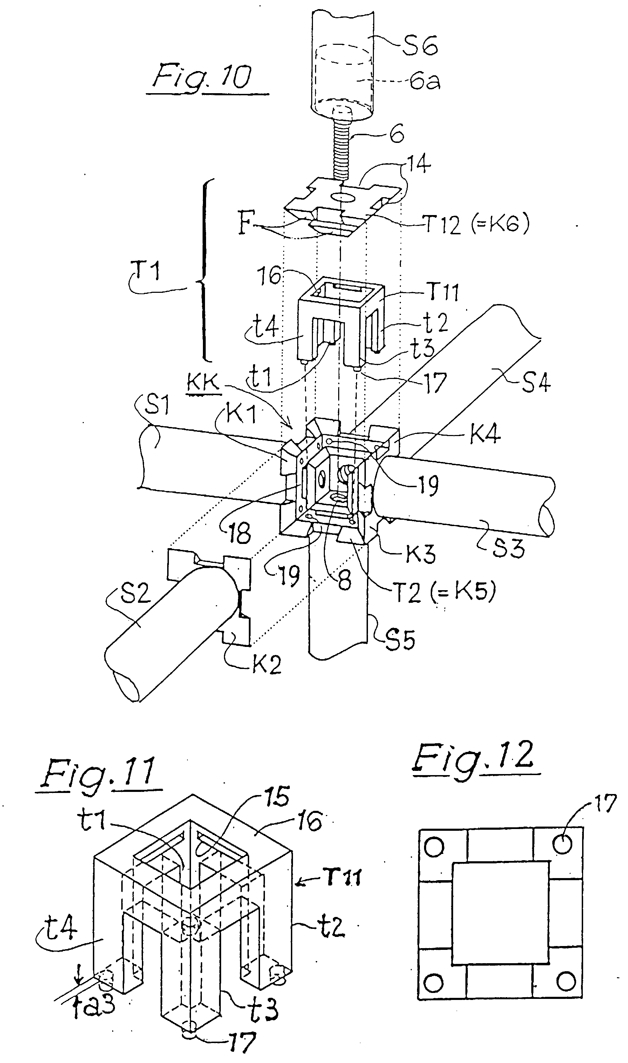

Bei der Stangenkupplung *SK 4* nach Fig. 10 sind die Kupplungselemente *K 1* bis *K 5* und das erste Verschlußmittel *T 1* bzw. das Verschlußmittel-Oberteil *T 12* mit Randaussparungen *14* im Bereich ihrer schräg nach außen weisenden Paßflächen *F, F* 1 bis *F 4* versehen. Dies bewirkt eine Materialeinsparung ohne Festigkeitseinbuße; außerdem kann man mit einem meißelartigen Werkzeug in den Kupplungsknoten *KK* greifen (Erleichterung bei der Demontage). Damit zusammenwirkend ist das Verschlußmittel-Unterteil *T 11* mit Schlitzen *15* an seinen Querstegen *16* versehen, so daß ein Schraubenzieher oder ein stecheisen- oder meißelartiges Werkzeug, das durch die Randaussparungen *14* hindurchgesteckt wird, an den Flanken der Schlitze 15 des Verschlußmittel-Unterteils *T 11* zu dessen Lockerung und Demontage angesetzt werden kann. Die Spannschraube *6* ist in diesem Beispiel über einen Stopfen *6 a* fest mit der Stange *S 6* verbunden und kann mit dieser in die gegenüberliegende Gewindebohrung *8* eingeschraubt werden.

Das Verschlußmittel-Unterteil *T 11* nach Fig. 10 ist vergrößert in Fig. 11 und 12 dargestellt. Es ist bevorzugt an den Stirnflächen seiner Profile *t 1* bis *t 4* mit Zapfen 17 versehen, die im eingesetzten Zustand von *T 11* in kleine, runde Sacklöcher 19 an der inneren Begrenzungsfläche *18* des pyramidenstumpfförmigen Elementabschnitts *PS 1* des gegenüberliegenden Kupplungsteils *K 5* (= *T 2*) eintauchen. Die Eintauchtiefe der Zapfen *17* ist mit *a 3* bezeichnet. Wegen der Austauschbarkeit der Kupplungselemente *K* bzw. *K 1* bis *K 6* weisen sie alle die Sacklöcher *19* auf, d.h. jedes Kupplungselement kann mit dem Verschlußmittel-Unterteil *T 11* kooperieren. Durch den Eingriff *17* bis *19* wird die Stabilität des Kupplungsknotens *KK* gegen Querkräfte verbessert.

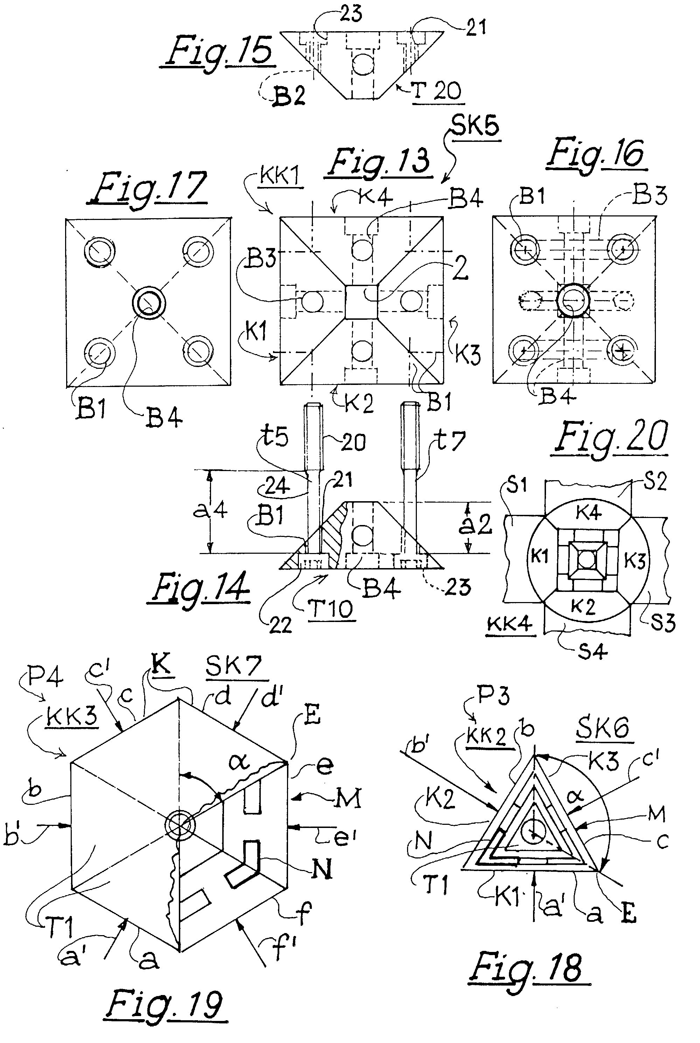

Von dem weiteren Beispiel einer Stangenkupplung *SK 5* nach Fig. 13 bis 17 sind zur Vereinfachung nur Teile des Kupplungsknotens *KK 1* dargestellt; es versteht sich, daß an die Kupplungselemente *K* bzw. Verschlußmittel *T 10, T 20* Kupplungsstangen *S* angeschlossen oder anzuschließen sind. Durch Hinterschneidungen gebildete Nischen *N 1* bis *N* 4 sind hier nicht vorgesehen, so daß die Pyramidenstümpfe der Kupplungselemente *K* bzw. Verschlußmittel *T 10, T 20* nicht tannenbaumartig abgesetzt, sondern im wesentlichen als Vollquerschnitt ausgebildet sind. Fig. 13 zeigt, daß die mantelseitigen Kupplungselemente *K, K 1* bis *K* 4 mit Durchgangsbohrungen *B 3* versehen sind. Fig. 14 und 15 zeigen ein grundseitiges und ein deckseitiges Verschlußmittel *T 10* bzw. *T 20* (die in ihrer Position auch miteinander vertauscht werden könnten), welche jeweils mit vier Aufnahmebohrungen *B 1* zum Halten von vier Paßstiften oder Paßschrauben *t 5 bis t 8* (zu sehen sind nur *t 5* und *t 7*) oder mit vier Aufnahmebohrungen *B 2* zum Einstecken der Paßstifte oder Paßschrauben *t 5 bis t 8* ausgestattet sind, vgl. auch Fig. 17. Wenn man glatte Paßstifte und glatte Aufnahmebohrungen *B 1, B 2* verwendet, können die Verschlußmittel *T 10* und *T 20* untereinander und mit den Kupplungselementen *K 1* bis *K 4* völlig gleichartig sein. Man bestimmt dann lediglich, welches der Verschlußmittel *T 10* oder *T 20* die vier Paßstifte tragen soll. Die Befestigung der Paßstifte innerhalb ihrer Aufnahmebohrungen *B 1* kann z.B. mittels Verkeilen oder Verstemmen erfolgen. Die Paßstifte können mit einem Gewinde *20* an ihrem einen Ende versehen und in die ein entsprechendes Gegengewinde *21* aufweisenden Aufnahmebohrungen *B 1, B 2* eingeschraubt werden. Sie können durch Paßschrauben ersetzt werden, die dann auch die Funktion von Spannschrauben übernehmen, so daß dann eine zentrale Spannschraube nur noch zum Ankuppeln von Stangen *S* dienen kann. Diese Paßschrauben *t 5* bis *t 8* haben zweckmäßig einen Innensechskant-Schraubenkopf *22,* der in den Kupplungselementen *K 1* bis *K 4* bzw. Verschlußmittel *T 10, T 20* angeordneten Ausnehmung *23* versenkbar ist, wobei der Schaft unterhalb des Schraubenkopfes auf einer Länge a *4* gewindefrei ist, damit das Gewinde der Paßschraube nur beim jeweils gegenüberliegenden Kupplungselement/Verschlußmittel greift. Eine zentrale Durchgangsbohrung *B 4* (so wie die Bohrungen *5, 8* bei den Stangenkupplungen *SK 1* bis *SK 4*) zum Einfügen einer (nicht dargestellten) Spannschraube *6* wahlweise zum Verspannen oder zum Ankuppeln von Stangen ist wegen der vorteilhaften Kompatibilität aller Kupplungselemente *K 1* bis *K 4* und Verschlußmittel *T 10, T 20* vorzugsweise bei allen diesen vorzusehen. Auch hierbei kann die Spannschraube, so wie anhand von Fig. 9 erläutert, auf dem Stück *a 2* glatt ausgeführt sein, damit eine gewisse Dehnlänge der Spannschraube *6* gegeben ist. Wie man erkennt, können so alle Kupplungselemente *K* eines Kupplungsknotens *KK 1* gleichartig ausgebildet sein. Beim Einfügen der Paßschrauben *t 5* bis *t 8* werden diese mit ihrem Gewinde 20 in die Aufnahmebohrungen (Gewinde *21*) *B 1* bzw. *B 2* eingeschraubt.

Fig. 18 zeigt eine Stangenkupplung *SK 6* mit einem Kupplungsknoten *KK 2*, welcher nicht eine quadratische Grundfläche, sondern eine dreieckige Grundfläche, und zwar die eines gleichseitigen Dreiecks, aufweist. Deswegen gibt es um den Mantel des Kupplungsknotens *KK 2* gesehen nur drei Hauptrichtungen *a*', *b'* und *c*' und grund- und deckseitig noch je eine weitere Hauptrichtung. Demgemäß sind in Umfangsrichtung nur drei Kupplungselemente *K 1* bis *K 3* vorgesehen, deren Spitzenwinkel α 120° beträgt. Der Kupplungsknoten *KK* 2 hat die Gestalt eines dreieckigen Prismas *P 3* mit den drei Ecken *E*, insbesondere eines geraden Prismas, so daß die mantelseitigen Kupplungselemente *K 1* bis *K 3* einen rechteckigen Grundriß haben. Die Mantelflächen sind generell mit *M* und im einzelnen mit *a, b, c* bezeichnet.

Fig. 19 zeigt einen Kupplungsknoten *KK 3* für eine Stangenkupplung *SK* 7 mit sechseckiger Grundfläche in Gestalt eines sechseckigen, insbesondere geraden Prismas *P 4*. Um den Mantel des Prismas *P 4* (in diesem Falle haben die Kupplungselemente *K 1* bis *K 6* einen Grundriß gleichzeitiger Dreiecke) ergeben sich sechs Mantelflächen *a* bis *f* und sechs zugehörige Hauptrichtungen *a*' bis *f*'. Zwei weitere Hauptrichtungen (oben und unten) sind ebenso wie im Beispiel nach Fig. 18 vorhanden. Während die nach außen weisenden Mantelflächen *M* bzw. a bis *f* der Kupplungselemente *K* bei dem Kupplungsknoten *KK 3* nach Fig. 19 eine rechteckige Grundfläche aufweisen, sind die grund- und deckseitigen Verschlußmittel (zu sehen ist nur Verschlußmittel *T 1*) sechseckig.

Die Beispiele zeigen, daß das System nach der Erfindung sehr variabel ist und auch Sonderfälle mit mehr als sechs Hauptrichtungen erfaßt werden können. Bei den Stangenkupplungen *SK 6 bzw. SK* 7 nach Fig. 18 bzw. 19 sind die ersten Verschlußmittel *T 1* naturgemäß drei bzw. sechsbeinig auszuführen, eine der drei Nischen *N* für eines der drei Profile ist in Fig. 18 und eine der sechs Nischen *N* für eines der sechs Profile ist in Fig. 19 durch verstärkte Umrandung hervorgehoben.

Im übrigen sind die Kupplungsknoten *KK 2* bzw. *KK* 3 der Stangenkupplungen *SK 6*, *SK 7* sinngemäß so aufgebaut, wie anhand der Figuren 1 bis 12 bereits erläutert. Auch mit dem zweiten grundsätzlichen Kupplungskonzept nach Fig. 13 bis 17 lassen sich drei-, fünf-, sechs- und allgemein *n*-eckige Kupplungsknoten verwirklichen.

Der Kupplungsknoten *KK 1* bei der Stangenkupplung *SK 5* nach Fig. 13 bis 17 hat noch den Vorteil, daß durch die Paßschrauben *t 5* bis *t 8* (vorzugsweise mit Innensechskant-Kopf), wenn sie an Stelle von Spannstiften verwendet werden die zentrale Gewindebohrung *B 4* eine Spannschraube *6* nicht mehr aufzunehmen braucht und frei ist zum Anschrauben von z.B. Muffen oder Stutzen *9*, mit denen die Stangen *S* in allen sechs Hauptrichtungen angekuppelt werden können. Der Kupplungsknoten *KK 1* kann dann also fix und fertig als "Würfel" montiert sein, bevor die Stangen *S* angekuppelt werden. Es ist aber auch eine vorteilhafte Ausführung möglich, bei der die Kupplungselemente *K 1* bis *K 4* und gegebenenfalls die Verschlußmittel *T 10, T 20* mit den Kupplungsstangen *S* fest verbunden, z.B. verschweißt sind. Dann kann man bis zu drei Paßschrauben *t* lösen und die zugehörigen Kupplungselemente *K* mit ihren Kupplungsstangen *S* entfernen, ohne daß der Kupplungsknoten *KK 1* aufgelöst ist, denn er wird noch durch eine Paßschraube *t* zusammengehalten und umfaßt ein Kupplungselement *K* und zwei Verschlußmittel. Dies ist bei Änderungen an der Stangenkupplung *SK 5* von großem Vorteil.

Bei allen Kupplungsknoten *KK bis KK 3* wurden gerade Prismen *P 1* gezeigt. In Sonderfällen können die Prismen für die Kupplungsknoten und/oder die stirnseitigen Paßflächen an den Kupplungsstangen *S* auch schiefwinklig sein, so daß an den "schiefen" Mantelflächen Kupplungsstangen mit von den rechtwinkligen Koordinatenrichtungen abweichenden Richtungen angekuppelt werden können, wie dies auch schon bei den Stangenkupplungen *SK 6 und SK 7* der Fall ist.

Der Kupplungsknoten *KK 4* nach Fig. 20 ist kugelförmig, so daß die anzukuppelnden Stangen *S 1* bis *S 4* (*S 5* und *S 6*, wenn montiert, wären nicht zu sehen) entsprechend kugelig-konkav ausgekehlt sein müssen. Die Kupplungselemente *K 1* bis *K 4 (K 5* und *K 6*, wenn montiert, wären nicht zu sehen) sind in ihrem äußeren Bereich zu Kugelsegmenten ergänzt; in ihrem inneren Bereich sind sie so ausgebildet, wie anhand der Fig. 1 bis 12 bereits erläutert.

## Patentansprüche

1. Stangenkupplung, insbesondere Eckverbindungskupplung für Hohlprofilstangen, wobei
a) an den Enden der Stangen (S) anschließbare, pyramidenstumpfförmige Kupplungselemente (K1,...,K4) mit Paßflächen (F1,...,F8) vorgesehen sind, wobei die Paßflächen durch die Pyramidenseiten gebildet werden, und
b) die Kupplungselemente in Umfangsrichtung mit ihren Paßflächen (F1,...,F8) aneinandergelegt einen zentralen Durchgangskanal (2) freilassen und einen Kupplungsknoten (KK, KK1, KK2, KK3) bilden, dessen offene Deck- und Grundseite jeweils durch ein erstes (T1) und ein zweites (T2) Verschlußmittel verschließbar sind, von denen jedes mindestens einen pyramidenstumpfförmigen Bereich aufweist, mit dessen Paßflächen es an den entsprechenden Paßflächen (F1, ... F8) der in Umfangsrichtung aneinandergelegten pyramidenstumpfförmigen Kupplungselemente (K1, ..., K4) anliegt,
c) wobei die Paßflächen (F1,...,F8) durch mindestens zwei, parallel zur Pyramidengrundfläche verlaufende, Nuten voneinander beabstandete, jeweils pyramidenstumpfförmige, Elementabschnitte (PS1, PS2) bilden, so daß bei aneinanderliegenden Paßflächen (F1, ... ,F8) zweier pyramidenstumpfförmiger Kupplungselemente (K1,...,K4) deren Nuten gegenüberliegen und jeweils einen Führungskanal (N1, ... ,N4) bilden,
d) in den ein am ersten Verschlußmittel (T1) vorgesehenes Profil (t1,...,t8) eingefügt ist, so daß die Elementabschnitte (PS2) hintergriffen und dadurch die pyramidenstumpfförmigen Kupplungselemente (K1, ... ,K4) zusammengehalten werden,
e) das erste Verschlußmittel (T1) eine Durchgangsöffnung (5) für den Schaft einer Spannschraube (6) aufweist,
f) mit der die einander gegenüberliegenden Verschlußmittel (T1, T10) gegeneinander und über die Paßflächen gegen die in Umfangsrichtung aneinandergelegten pyramidenstumpfförmigen Kupplungselemente (K1, ... ,K4) verspannbar sind.

2. Stangenkupplung nach Anspruch 1, dadurch gekennzeichnet, daß das erste Verschlußmittel (T1) als Kupplungselement (K) zum Ankuppeln einer Stange (S6) an seiner Außenseite ausgebildet ist.

3. Stangenkupplung nach Anspruch 1 oder 2, dadurch gekennzeichnet, daß das zweite Verschlußmittel (T2) als Kupplungselement (K) zum Ankuppeln einer Stange (S5) an seiner Außenseite ausgebildet ist.

4. Stangenkupplung nach einem der Ansprüche 1 bis 3, dadurch gekennzeichnet, daß der Spitzenwinkel (α) der die Mantelflächen (M) des Kupplungsknotens (KK) bildenden Kupplungselemente (K) α = 360°/n beträgt, wobei n = Anzahl der Mantelflächen (M) des Kupplungsknotens (KK) bedeutet.

5. Stangenkupplung nach einem der Ansprüche 1 bis 4, dadurch gekennzeichnet, daß der von den Kupplungselementen (K) und den Verschlußelementen (T1, T2) gebildete Kupplungsknoten (KK, KK2, KK3) die Gestalt eines geraden Prismas (P1) hat.

6. Stangenkupplung nach einem der Ansprüche 1 bis 5, dadurch gekennzeichnet, daß der von den Kupplungselementen (K) und den Verschlußmitteln (T1, T2) gebildete Kupplungsknoten (KK) die Gestalt eines Quaders, insbesondere eines Würfels, hat.

7. Stangenkupplung nach einem der Ansprüche 1 bis 6, dadurch gekennzeichnet, daß die pyramidenstumpfförmigen Kupplungselemente (K1,...,K4) in ihrer Form und in ihren Abmessungen gleichartig ausgebildet sind.

8. Stangenkupplung nach Anspruch 7, dadurch gekennzeichnet, daß die pyramidenstumpfförmigen Kupplungselemente (K1,...,K4) mit einer Gewindebohrung (8) oder dgl. zum Verankern der Spannschraube (6) versehen sind, so daß ein solches Kupplungselement als zweites Verschlußmittel (T2=K5) verwendbar ist, das mit dem gegenüberliegenden ersten Verschlußmittel (T1) verschraubbar ist.

9. Stangenkupplung nach einem der Ansprüche 1 bis 8, dadurch gekennzeichnet, daß das erste Verschlußmittel (T1) zweiteilig ausgebildet ist, bestehend aus einem Verschlußmittel-Unterteil (T11) und einem Verschlußmittel-Oberteil (T12), welches auf das Verschlußmittel-Unterteil (T11) aufsetzbar und mittels einer Spannschraube (6) zusammen mit dem Verschlußmittel-Unterteil (T11) mit den übrigen Kupplungselementen (K, K1 bis K5) zu einem Kupplungsknoten (KK) verspannbar ist.

10. Stangenkupplung nach Anspruch 9, dadurch gekennzeichnet, daß das Verschlußmittel-Oberteil (T12) zu den anderen Kupplungselementen (K, K1 bis K5) kompatibel ausgebildet ist, so daß jedes der Kupplungselemente (K) mit dem Verschlußmittel-Unterteil (T11) zum ersten Verschlußmittel (T1) kombinierbar ist.

11. Stangenkupplung nach einem der Ansprüche 1 bis 10, dadurch gekennzeichnet, daß die Kupplungselemente bzw. Verschlußmittel (K, T1, T2) an ihren Außenflächen Fortsätze (GS, 9) zum lösbaren Ankuppeln der Stangen (S) aufweisen.

12. Stangenkupplung nach Anspruch 11, dadurch gekennzeichnet, daß die Fortsätze Stutzen (GS) mit Außengewinde (13) sind, auf welche als Rohre ausgebildete Stangen mit Innengewinde aufschraubbar sind.

13. Stangenkupplung nach Anspruch 11, dadurch gekennzeichnet, daß zylindrische Fortsätze (9) mit wenigstens einer radialen Gewindebohrung (12) versehen sind, so daß auf diese Fortsätze (9) aufgeschobene oder aufgeschraubte Stangen (S6) mittels diese durchdringender, in die Gewindebohrungen (12) einschraubbarer Madenschrauben (10) absicherbar sind.

14. Stangenkupplung nach einem der Ansprüche 1 bis 5 sowie 11 bis 13, dadurch gekennzeichnet, daß der von den Kupplungselementen (K) gebildete Kupplungsknoten(KK3) die Gestalt eines sechseckigen Prismas (P4) hat, wobei die Verschlußmittel (T2, T1) einen sechseckigen Grundriß und die mantelseitigen Kupplungselemente (K) einen rechteckigen Grundriß haben.

15. Stangenkupplung nach einem der Ansprüche 1 bis 5 sowie 11 bis 13, dadurch gekennzeichnet, daß der von den Kupplungselementen (K) gebildete Kupplungsknoten (KK2) die Gestalt eines dreieckigen Prismas (P3) hat, wobei die Verschlußmittel (T2, T1) einen dreieckigen Grundriß und die Kupplungselemente (K) einen rechteckigen Grundriß haben.

16. Stangenkupplung nach einem der Ansprüche 1 bis 15, dadurch gekennzeichnet, daß die Kupplungselemente (K) bzw. das Verschlußmittel-Oberteil (T12) oder das erste Verschlußmittel (T1) und das zweite Verschlußmittel (T2) an die Enden der Stangen (S) angeschweißt sind.

17. Stangenkupplung nach einem der Ansprüche 1 bis 16, dadurch gekennzeichnet, daß die Kupplungselemente (K) bzw. das Verschlußmittel-Oberteil (T12) oder das erste Verschlußmittel (T1) und das zweite Verschlußmittel (T2) mit den Enden der Stangen (S) verklebt sind.

18. Stangenkupplung, insbesondere Eckverbindungskupplung für Hohlprofilstangen, wobei
a) an den Enden der Stangen (S) anschließbare, pyramidenstumpfförmige Kupplungselemente (K1,...,K4) mit Durchgangsbohrungen (B3) und Paßflächen (F1,...,F8) vorgesehen sind, wobei die Paßflächen durch die Pyramidenseiten gebildet werden und
b) die Kupplungselemente in Umfangsrichtung mit ihren Paßflächen (F1,...,F8) aneinandergelegt einen zentralen Durchgangskanal freilassen und einen Kupplungsknoten (KK1) bilden, dessen offene Deck- und Grundseite jeweils durch ein erstes und ein zweites Verschlußmittel (T10, T20) verschließbar sind, von denen jedes einen pyramidenstumpfförmigen Bereich aufweist, mit dessen Paßflächen es an den entsprechenden Paßflächen (F1,...,F8) der in Umfangsrichtung aneinandergelegten Kupplungselemente (K1, ... ,K4) anliegt,
c) wobei die Durchgangsbohrungen (B3) senkrecht zur Deck- und Grundseite verlaufen,
d) und sich vom ersten Verschlußmittel (T10) Paßstifte oder Paßschrauben (t5 bis t8) erstrecken, die beim Einfügen des ersten Verschlußmittels (T10) in der Kupplungsknoten (KK1) in die Durchgangsbohrungen (B3) eingreifen, und
e) das erste Verschlußmittel (T10) eine Durchgangsöffnung (B4) für den Schaft einer Spannschraube (6) aufweist,
f) mit der die beiden gegenüberliegenden Verschlußmittel (T10, T20) gegeneinander und über die Paßflächen gegen die in Umfangsrichtung aneinandergelegten pyramidenstumpfförmigen Kupplungselemente (K1,..., K4) verspannbar sind.

19. Stangenkupplung nach Anspruch 18, dadurch gekennzeichnet, daß alle Kupplungselemente (K, K1 bis K4) und Verschlußmittel (T10, T20) zueinander gleichartig ausgebildet sind und hierzu aufweisen:
Durchgangsbohrungen (B3) zum Hindurchstecken von Paßstiften oder Paßschrauben (t5 bis t8), achsparallel zur Symmetrieachse des Pyramidenstumpfes des jeweiligen Kupplungselements (K, K1, ... , K4) verlaufende Paßstift- oder Paßschraubenaufnahmebchrungen oder -aussparungen (B1) zum Halten der Paßstifte oder Paßschrauben(t5 bis t8).

20. Stangenkupplung nach einem der Ansprüche 1 bis 19, dadurch gekennzeichnet, daß die Kupplungselemente (K, K1 bis K4) und das erste und zweite Verschlußmittel (T1, T2, T10, T20) jeweils eine zentrale Gewindebohrung zum Einfügen einer Spannschraube (6) zur Verspannung aufweisen.

21. Stangenkupplung nach einem der Ansprüche 1 bis 20, dadurch gekennzeichnet, daß die Kupplungselemente (K, K1 bis K5) und das erste und zweite Verschlußmittel (T1, T10, T20) bzw. das Verschlußmittel-Oberteil (T12) mit Randaussparungen (14) im Bereich ihrer nach außen weisenden Paßflächen (F, F1 bis F4) versehen sind.

22. Stangenkupplung nach Anspruch 21, dadurch gekennzeichnet, daß das Verschlußmittel-Unterteil (T11) mit Schlitzen (15) im Bereich seines äußeren Randes versehen ist, so daß ein Schraubenzieher oder ein stecheisen- oder meißelartiges Werkzeug durch die Randaussparungen (14) hindurchsteckbar und an den Flanken der Schlitze (15) des Verschlußmittel-Unterteils (T11) ansetzbar ist.

23. Stangenkupplung nach einem der Ansprüche 1, 9 oder 10, dadurch gekennzeichnet, daß die Profile (tl bis t4) fußseitig mit Zapfen (17) versehen sind, mit denen sie im eingesetzten Zustand in Sacklöcher (19) der Begrenzungsfläche des jeweils gegenüberliegenden Kupplungselementes (K) eintauchen.

## Claims

1. Rod coupling, in particular corner-connection coupling for hollow profile rods,
a) it being the case that coupling elements (K1,...,K4) which can be connected to the ends of the rods (S), are in the form of truncated pyramids and have fitting surfaces (F1,...,F8) are provided, the fitting surfaces being formed by the pyramid sides, and
b) it being the case that the coupling elements, resting against one another in the peripheral direction by way of their fitting surfaces (F1,...,F8), leave a central through-passage duct (2) and form a coupling joint (KK, KK1, KK2, KK3), of which the open top side and bottom side can be closed off in each case by a first closure means (T1) and a second closure means (T2), of which each has at least one truncated-pyramid region, the closure means using the fitting surfaces of the latter to butt against the corresponding fitting surfaces (F1,...,F8) of the truncated-pyramid coupling elements (K1,...,K4), which rest against one another in the peripheral direction,
c) it being the case that the fitting surfaces (F1,...,F8) form element sections (PS1, PS2) which are spaced apart from one another by at least two grooves, running parallel to the pyramid base surface, and which are in the form of truncated pyramids, with the result that, in the case of the fitting surfaces (F1,...,F8) of two truncated-pyramid coupling elements (K1,...,K4) abutting, the grooves thereof are located opposite one another and each form a guide duct (N1,...,N4),
d) into which a profile (t1,...,t8) which is provided on the first closure means (T1) is introduced, with the result that these profiles engage behind the element sections (PS2) and the truncated-pyramid coupling elements (K1,...,K4) are thus held together,
e) the first closure means (T1) has a through-passage opening (5) for the shank of a tightening screw (6),
f) by means of which the mutually opposite closure means (T1, T10) can be braced with respect to one another and, via the fitting surfaces, with respect to the truncated-pyramid coupling elements (K1,...,K4), which rest against one another in the peripheral direction.

2. Rod coupling according to Claim 1, characterized in that the first closure means (T1) is designed as a coupling element (K) for the coupling of a rod (S6) to its outside.

3. Rod coupling according to Claim 1 or 2, characterized in that the second closure means (T2) is designed as a coupling element (K) for the coupling of a rod (S5) to its outside.

4. Rod coupling according to one of Claims 1 to 3, characterized in that the acute angle (α) of the coupling elements (K) which form the lateral surfaces (M) of the coupling joint (KK), is α = 360°/n, where n is the number of lateral surfaces (M) of the coupling joint (KK).

5. Rod coupling according to one of Claims 1 to 4, characterized in that the coupling joint (KK, KK2, KK3), which is formed by the coupling elements (K) and the closure elements (T1, T2), is in the form of a right prism (P1).

6. Rod coupling according to one of Claims 1 to 5, characterized in that the coupling joint (KK), which is formed by the coupling elements (K) and the closure means (T1, T2), is in the form of a cuboid, in particular of a cube.

7. Rod coupling according to one of Claims 1 to 6, characterized in that the truncated-pyramid coupling elements (K1,...,K4) are designed to be the same in terms of shape and dimensions.

8. Rod coupling according to Claim 7, characterized in that the truncated-pyramid coupling elements (K1,...,K4) are provided with a threaded bore (8) or the like for anchoring the tightening screw (6), with the result that such a coupling element can be used as a second closure means (T2=K5), which can be screwed to the opposite, first closure means (T1).

9. Rod coupling according to one of Claims 1 to 8, characterized in that the first closure means (T1) is designed in two parts, comprising a closure-means bottom part (T11) and a closure-means top part (T12), it being possible for the latter to be positioned on the closure-means bottom part (T11) and to be braced by means of a tightening screw (6), together with the closure-means bottom part (T11), with the rest of the coupling elements (K, K1 to K5) to form a coupling joint (KK).

10. Rod coupling according to Claim 9, characterized in that the closure-means top part (T12) is designed to be compatible with the other coupling elements (K, K1 to K5), with the result that each of the coupling elements (K) can be combined with the closure-means bottom part (T11) to form the first closure means (T1).

11. Rod coupling according to one of Claims 1 to 10, characterized in that the coupling elements and closure means (K, T1, T2) have continuations (GS, 9) on their outer surfaces for the purpose of coupling the rods (S) thereto in a releasable manner.

12. Rod coupling according to Claim 11, characterized in that the continuations are connection stubs (GS) which have external threads (13) and onto which tube-design rods with internal threads can be screwed.

13. Rod coupling according to Claim 11, characterized in that cylindrical continuations (9) with at least one radial threaded bore (12) are provided, with the result that rods (S6) which have been screwed or pushed onto the continuations (9) can be secured by means of grub screws (10), which pass through said rods and can be screwed into the threaded bores (12).

14. Rod coupling according to one of Claims 1 to 5 and 11 to 13, characterized in that the coupling joint (KK3), which is formed by the coupling elements (K) is in the form of a hexagonal prism (P4), the closure means (T2, T1) having a hexagonal outline and the lateral-surface coupling elements (K) having a rectangular outline.

15. Rod coupling according to one of Claims 1 to 5 and 11 to 13, characterized in that the coupling joint (KK2), which is formed by the coupling elements (K), is in the form of a triangular prism (P3), the closure means (T2, T1) having a triangular outline and the coupling elements (K) having a rectangular outline.

16. Rod coupling according to one of Claims 1 to 15, characterized in that the coupling elements (K) and/or the closure-means top part (T12) or the first closure means (T1) and the second closure means (T2) are welded to the ends of the rods (S).

17. Rod coupling according to one of Claims 1 to 16, characterized in that the coupling elements (K) and/or the closure-means top part (T12) or the first closure means (T1) and the second closure means (T2) are adhesively bonded to the ends of the rods (S).

18. Rod coupling, in particular corner-connection coupling for hollow profile rods,
a) it being the case that coupling elements (K1,...,K4) which can be connected to the ends of the rods (S), are in the form of truncated pyramids and have through-passage bores (B3) and fitting surfaces (F1,...,F8) are provided, the fitting surfaces being formed by the pyramid sides, and
b) it being the case that the coupling elements, resting against one another in the peripheral direction by way of their fitting surfaces (F1,...,F8), leave a central through-passage duct and form a coupling joint (KK1), of which the open top side and bottom side can be closed off in each case by a first closure means (T10) and a second closure means (T20), of which each has a truncated-pyramid region, the closure means using the fitting surfaces of the latter to butt against the corresponding fitting surfaces (F1,...,F8) of the coupling elements (K1,...,K4), which rest against one another in the peripheral direction,
c) it being the case that the through-passage bores (B3) run perpendicularly with respect to the top side and bottom side,
d) and set pins or set screws (t5 to t8) extend from the first closure means (T10), said pins or screws engaging in the through-passage bores (B3) when the first closure means (T10) is introduced into the coupling joint (KK1), and
e) the first closure means (T10) has a through-passage opening (B4) for the shank of a tightening screw (6),
f) by means of which the mutually opposite closure means (T10, T20) can be braced with respect to one another and, via the fitting surfaces, with respect to the truncated-pyramid coupling elements (K1,...,K4), which rest against one another in the peripheral direction.

19. Rod coupling according to Claim 18, characterized in that all the coupling elements (K, K1 to K4) and closure means (T10, T20) are designed to be the same as one another and, for this purpose, have: through-passage bores (B3) for the insertion of set pins or set screws (t5 to t8), as well as set-pin-receiving or set-screw-receiving bores or cutouts (B1) which run in an axis-parallel manner with respect to the axis of symmetry of the truncated pyramid of the respective coupling element (K, K1,...,K4) and are intended for retaining the set pins or set screws (t5 to t8).

20. Rod coupling according to one of Claims 1 to 19, characterized in that the coupling elements (K, K1 to K4) and the first and second closure means (T1, T2, T10, T20) each have a central threaded bore for the introduction of a tightening screw (6) for bracing purposes.

21. Rod coupling according to one of Claims 1 to 20, characterized in that the coupling elements (K, K1 to K5) and the first and second closure means (T1, T10, T20) and/or the closure-means top part (T12) are provided with border cutouts (14) in the region of their outwardly oriented fitting surfaces (F, F1 to F4).

22. Rod coupling according to Claim 21, characterized in that the closure-means bottom part (T11) is provided with slits (15) in the region of its outer border, with the result that a screwdriver or a chisel-like tool can be inserted through the border cutouts (14) and positioned on the flanks of the slits (15) of the closure-means bottom part (T11).

23. Rod coupling according to one of Claims 1, 9 and 10, characterized in that the profiles (t1 to t4) are provided at the bottom with pegs (17) by means of which, in the inserted state, they penetrate in blind holes (19) of the boundary surface of the respectively opposite coupling element (K).

## Revendications

1. Jonction de barres, en particulier jonction d'angle pour des barres profilées creuses, dans laquelle
a) aux extrémités des barres (S) sont prévus des éléments de jonction jointifs (K1, ..., K4), en forme de troncs de pyramide avec des faces de contact (F1, ..., F8), les faces de contact étant formées par les côtés des pyramides, et
b) les éléments de jonction ajustés l'un à l'autre en direction périphérique par leurs faces de contact (F1, ..., F8) laissent libre un canal de passage central (2) et forment un noeud de jonction (KK, KK1, KK2, KK3), dont les côtés supérieur et inférieur ouverts peuvent être obturés respectivement par un premier (T1) et par un second (T2) moyen de fermeture, dont chacun présente au moins une zone en forme de tronc de pyramide, par les faces de contact duquel il s'applique sur les faces de contact correspondantes (F1, ..., F8) des éléments de jonction (K1, ..., K4) en forme de tronc de pyramide ajustés l'un à l'autre en direction périphérique,
c) dans laquelle les faces de contact (F1, ..., F8) forment respectivement des portions d'élément (PS1, PS2) en forme de troncs de pyramide, espacées l'une de l'autre par au moins deux rainures orientées parallèlement à la base de la pyramide, de telle façon que, lorsque des faces de contact (F1, ..., F8) de deux éléments de jonction (K1, ..., K4) en forme de troncs de pyramide sont ajustées l'une à l'autre, leurs rainures se trouvent l'une en face de l'autre et forment un canal de guidage respectif (N1, ..., N4),
d) dans lequel est inséré un profil (t1, ..., t8) prévu sur le premier moyen de fermeture (T1), de telle façon que les portions d'élément (PS2) soient saisies par derrière et qu'ainsi les éléments de jonction en forme de troncs de pyramide (K1, ..., K4) soient maintenus ensemble,
e) le premier moyen de fermeture (T1) présente une ouverture de passage (5) pour le corps d'une vis de serrage (6),
f) avec laquelle les moyens de fermeture (T1, T10) opposés l'un à l'autre peuvent être serrés l'un vers l'autre et, par l'intermédiaire des faces de contact, vers les éléments de jonction en forme de troncs de pyramide (K1, ..., K4) ajustés l'un à l'autre en direction périphérique.

2. Jonction de barres suivant la revendication 1, caractérisée en ce que le premier moyen de fermeture (T1) est constitué par un élément de jonction (K) pour la jonction d'une barre (S6) à sa face extérieure.

3. Jonction de barres suivant la revendication 1 ou 2, caractérisée en ce que le second moyen de fermeture (T2) est constitué par un élément de jonction (K) pour la jonction d'une barre (S5) à sa face extérieure.

4. Jonction de barres suivant l'une quelconque des revendications 1 à 3, caractérisée en ce que l'angle au sommet (α) des éléments de jonction (K) formant les faces latérales (M) du noeud de jonction (KK) vaut α = 360°/n, où n exprime le nombre des faces latérales (M) du noeud de jonction (KK).

5. Jonction de barres suivant l'une quelconque des revendications 1 à 4, caractérisée en ce que le noeud de jonction (KK, KK2, KK3) formé par les éléments de jonction (K) et les éléments de fermeture (T1, T2) a la forme d'un prisme droit (P1).

6. Jonction de barres suivant l'une quelconque des revendications 1 à 5, caractérisée en ce que le noeud de jonction (KK) formé par les éléments de jonction (K) et les moyens de fermeture (T1, T2) a la forme d'un carré, en particulier d'un cube.

7. Jonction de barres suivant l'une quelconque des revendications 1 à 6, caractérisée en ce que les éléments de jonction en forme de troncs de pyramide (K1, ..., K4) sont identiques par leur forme et par leurs dimensions.

8. Jonction de barres suivant la revendication 7, caractérisée en ce que les éléments de jonction en forme de troncs de pyramide (K1, ..., K4) sont pourvus d'un trou fileté (8) ou analogue pour l'ancrage de la vis de serrage (6), de telle façon qu'un tel élément de jonction puisse être utilisé comme second moyen de fermeture (T2 = K5), qui peut être vissé au premier moyen de fermeture (T1) qui lui fait face.

9. Jonction de barres suivant l'une quelconque des revendications 1 à 8, caractérisée en ce que le premier moyen de fermeture (T1) est réalisé en deux parties, se composant d'une partie inférieure du moyen de fermeture (T11) et d'une partie supérieure du moyen de fermeture (T12), qui peut être posée sur la partie inférieure du moyen de fermeture (T11) et qui peut être serrée au moyen d'une vis de serrage (6), en même temps que la partie inférieure du moyen de fermeture (T11), avec les autres éléments de jonction (K, K1 à K5) en un noeud de jonction (KK).

10. Jonction de barres suivant la revendication 9, caractérisée en ce que la partie supérieure du moyen de fermeture (T12) est compatible avec les autres éléments de jonction (K, K1 à K5), de telle façon que chacun des éléments de jonction (K) puisse être combiné avec la partie inférieure du moyen de fermeture (T11) pour former le premier moyen de fermeture (T1).

11. Jonction de barres suivant l'une quelconque des revendications 1 à 10, caractérisée en ce que les éléments de jonction respectivement les moyens de fermeture (K, T1, T2) présentent sur leurs faces extérieures des bouts saillants (GS, 9) pour la jonction démontable des barres (S).

12. Jonction de barres suivant la revendication 11, caractérisée en ce que les bouts saillants sont des tubulures (GS) avec un filetage extérieur (13), sur lesquelles peuvent se visser des barres en forme de tubes, avec un filetage intérieur.

13. Jonction de barres suivant la revendication 11, caractérisée en ce que des bouts saillants cylindriques (9) sont pourvus d'au moins un trou radial fileté (12), de telle façon que des barres (S6) engagées ou vissées sur ces bouts saillants (9) puissent être fixées au moyen de vis sans tête (10) traversant celles-ci, à visser dans les trous filetés (12).

14. Jonction de barres suivant l'une quelconque des revendications 1 à 5 ainsi que 11 à 13, caractérisée en ce que le noeud de jonction (KK3) formé par les éléments de jonction (K) a la forme d'un prisme hexagonal (P4), les moyens de fermeture (T2, T1) ayant la forme d'un hexagone et les éléments de jonction latéraux (K) ayant la forme d'un rectangle.

15. Jonction de barres suivant l'une quelconque des revendications 1 à 5 ainsi que 11 à 13, caractérisée en ce que le noeud de jonction (KK2) formé par les éléments de jonction (K) a la forme d'un prisme triangulaire (P3), les moyens de fermeture (T2, T1) ayant la forme d'un triangle et les éléments de jonction latéraux (K) ayant la forme d'un rectangle.

16. Jonction de barres suivant l'une quelconque des revendications 1 à 15, caractérisée en ce que les éléments de jonction (K) respectivement la partie supérieure du moyen de fermeture (T12) ou le premier moyen de fermeture (T1) et le second moyen de fermeture (T2) sont soudés aux extrémités des barres (S).

17. Jonction de barres suivant l'une quelconque des revendications 1 à 16, caractérisée en ce que les éléments de jonction (K) respectivement la partie supérieure du moyen de fermeture (T12) ou le premier moyen de fermeture (T1) et le second moyen de fermeture (T2) sont collés aux extrémités des barres (S).

18. Jonction de barres, en particulier jonction d'angle pour des barres profilées creuses, dans laquelle
a) aux extrémités des barres (S) sont prévus des éléments de jonction jointifs (K1, ..., K4), en forme de troncs de pyramide avec des trous de passage (B3) et des faces de contact (F1, ..., F8), les faces de contact étant formées par les côtés des pyramides, et
b) les éléments de jonction ajustés l'un à l'autre en direction périphérique par leurs faces de contact (F1, ..., F8) laissent libre un canal de passage central et forment un noeud de jonction (KK1), dont les côtés supérieur et inférieur ouverts peuvent être obturés respectivement par un premier et par un second (T10, T20) moyen de fermeture, dont chacun présente une zone en forme de tronc de pyramide, par les faces de contact duquel il s'applique sur les faces de contact correspondantes (F1, ..., F8) des éléments de jonction (K1, ..., K4) en forme de tronc de pyramide ajustés l'un à l'autre en direction périphérique,
c) dans laquelle les trous de passage (B3) sont orientés perpendiculairement au côté supérieur et au côté inférieur,
d) et à partir du premier moyen de fermeture (T10) s'étendent des tiges d'adaptation ou des vis d'adaptation (t5 à t8), qui pénètrent dans les trous de passage (B3) lors de l'insertion du premier moyen de fermeture (T10) dans le noeud de jonction (KK1), et
e) le premier moyen de fermeture (T10) présente un trou de passage (B4) pour le corps d'une vis de serrage (6),
f) avec laquelle les deux moyens de fermeture (T10, T20) opposés l'un à l'autre peuvent être serrés l'un vers l'autre et, par l'intermédiaire des faces de contact, vers les éléments de jonction en forme de troncs de pyramide (K1, ..., K4) ajustés l'un à l'autre en direction périphérique.

19. Jonction de barres suivant la revendication 18, caractérisée en ce que tous les éléments de jonction (K, K1 à K4) et les moyens de fermeture (T10, T20) sont identiques l'un à l'autre et à cet effet présentent:
des trous de passage (B3) pour l'introduction de tiges d'adaptation ou de vis d'adaptation (t5 à t8), des trous de réception ou des évidements de réception (B1) des tiges d'adaptation ou des vis d'adaptation, d'axe parallèle à l'axe de symétrie du tronc de pyramide de l'élément de jonction respectif (K, K1, ..., K4), pour le maintien des tiges d'adaptation ou des vis d'adaptation (t5 à t8).

20. Jonction de barres suivant l'une quelconque des revendications 1 à 19, caractérisée en ce que les éléments de jonction (K, K1 à K4) et les premier et second moyens de fermeture (T1, T2, T10, T20) présentent respectivement un trou central fileté pour l'insertion d'une vis de serrage (6) pour le serrage.

21. Jonction de barres suivant l'une quelconque des revendications 1 à 20, caractérisée en ce que les éléments de jonction (K, K1 à K5) et les premier et second moyens de fermeture (T1, T10, T20) respectivement la partie supérieure du moyen de fermeture (T12) sont pourvus d'évidement marginaux (14) dans la région de leurs faces de contact (F, F1 à F4) dirigées vers l'extérieur.

22. Jonction de barres suivant la revendication 21, caractérisée en ce que la partie inférieure du moyen de fermeture (T11) est pourvue de fentes (15) dans la région de son bord extérieur, de telle façon qu'un tournevis ou un outil du genre d'un ciseau ou d'un burin puisse être introduit à travers les évidements marginaux (14) et puisse être appliqué sur les flancs des fentes (15) de la partie inférieure du moyen de fermeture (T11).

23. Jonction de barres suivant l'une quelconque des revendications 1, 9 ou 10, caractérisée en ce que les profilés (tl à t4) sont pourvus au pied de tenons (17), avec lesquels ils plongent, à l'état assemblé, dans des trous borgnes (19) de la surface extérieure de l'élément de jonction (K) respectivement opposé.
